# EUROPÄISCHE PATENTANMELDUNG

(11) **EP 3 175 946 A2**
(43) Veröffentlichungstag der Anmeldung: **07.06.2017**
(21) Anmeldenummer: 16001838.8
(22) Anmeldetag: 23.08.2016
(51) Int. Cl.: B23K 20/12

(54) **VERFAHREN ZUM FÜGEN VON BLECHÜBERLAPPVERBINDUNGEN IM TRANSFORMATORENBAU**

(30) Priorität: 04.12.2015 DE 102015015591
(71) Anmelder: SGB Sächsisch-Bayerische Starkstrom- Gerätebau GmbH, 08496 Neumark/Sachsen (DE)
(72) Erfinder: SCHMIDT, Uwe, 08527 Plauen (DE); TIEPNER, Frank, 08496 Neumark (DE); WUNDERLICH, Matthias, 09212 Limbach-Oberfrohna (DE)
(74) Vertreter: Auerbach, Bettina

(57) **Zusammenfassung**

Die Erfindung betrifft ein Verfahren zum Fügen von Blechüberlappverbindungen im Transformatorenbau mittels Rührreibschweißen, bei dem ein rotierendes Werkzeug (1), an dessen Stirnfläche (Schulter) (2) ein Schweißstift (3) angeordnet ist, welcher beim Schweißvorgang reibend in die Fügestelle eintaucht und dessen Schulter (2) dabei auf der Bauteiloberfläche aufsitzt, so dass beim Schweißvorgang eine Werkstofferweichung und -vermischung stattfindet und dadurch an dem Ausleiter (5) eines Transformators für den elektrischen Abgriff ein die Transformatorenwicklung bildendes darüber liegendes Blechband (6) fest angefügt wird, wobei durch Niederhaltetechnik (7) das anzuordnende Blechband (6) auf der Schiene (5) mittels sehr eng an bzw. neben der Fügestelle (4) lagefixiert und niedergehalten wird und durch eine geeignete Wahl von axialer Werkzeug-Anpresskraft, -Drehzahl, -Anstellwinkel und linearem Vorschub in Abhängigkeit von Materialart und Bauteilabmessungen eine optimale Prozesstemperatur erreicht wird, welche ein gutes Verrühren und damit eine sichere Verbindung der Fügepartner ermöglicht wird.

## Beschreibung

Die Erfindung betrifft ein Verfahren zum Fügen von Blechüberlappverbindungen im Transformatorenbau, wie es einerseits für das Zusammenfügen der Schienen für den elektrischen Abgriff mit dem darüber anzuordnenden durchlaufenden Bandblech der Transformatorenwicklung und andererseits für die Bandblechverlängerung benötigt wird. Das Verfahren kommt sowohl bei Verteil-, Mittelleistungs- als auch Leistungstransformatoren zum Einsatz.

Üblicher Weise wird im Transformatorenbau beim Zusammenfügen der Schienen für den elektrischen Abgriff mit dem darüber anzuordnenden durchlaufenden Blech der Transformatorenwicklung und auch bei der Bandblechverlängerung der Wicklung ein mechanisches Durchsetzfügeverfahren, wie Kaltpressschweißen, angewendet. Die Erfahrungen haben jedoch gezeigt, dass die Qualität der Verbindungen nicht immer einwandfrei und nicht immer durchweg fehlerfrei ist. Dies ist dem Umstand geschuldet, dass dieses Verfahren auf Grund seines Materialübergriffs auf gleichbleibende Materialeigenschaften aufbaut, welche jedoch nicht immer gewährleistet sind.

Da es nicht das Gefüge der Materialstruktur durch Wärmeeinfluss auflöst, sondern nur auf Druckausübung basiert, erfolgt der Zusammenschluss sehr zeitaufwendig. Dadurch ist die Verfahrenszeit für das Zusammenfügen zu langsam. Mit Kaltpressschweißen realisierbare Kontaktflächen müssen pro Verbindung mit vielen solchen Presspunkten erzeugt werden, was bei dem langsamen Verfahren sehr zeitintensiv ist.

Es ist deshalb Aufgabe der Erfindung, die bekannten Probleme bei der Herstellung von stabilen und sicheren Verbindungen zwischen Bauteilen mit gleichen metallischen Materialarten oder unterschiedlichen metallischen Materialien und auch gegebenenfalls mit sehr unterschiedlichen Materialstärken, bei denen wenigstens einer der Materialpartner nur 0,3 mm Materialstärke aufweist, im Transformatorenbau zu überwinden und ein Verfahren zu schaffen, mit dessen Hilfe sowohl eine stabile Verbindung eines Überlappstoßes von gleichartigen Blechen mit gleicher Materialstärke und Materialart, wie Kupfer mit Kupfer oder Aluminium mit Aluminium für die Verlängerung von Leiterbändern der Wicklung zu schaffen, als auch eine stabile Verbindung von Wicklung und Ausleiter mit unterschiedlichen Materialarten , wie Kupfer oder Aluminium als Überlappverbindung zu schaffen.
Trotz der gesetzten höheren qualitativen Ansprüche an die Verbindungsqualität und die vielfältigen Einsatzbedingungen der Materialbeschaffenheit soll zudem die Verfahrenszeit für das Zusammenfügen verkürzt werden und der Übergangswiderstand der Verbindungsstelle verringert werden, in dem ein optimaler und stabiler Werkstofftransport innerhalb der Naht angestrebt wird, Hohlräume oder andere defekte in der Schweißnaht, wie Gratbildung sicher vermieden werden sollen.

Erfindungsgemäß wird die Aufgabe durch die Merkmale der Ansprüche 1 und 2 gelöst, wobei die vorteilhaften Ausgestaltungen in den jeweiligen Unteransprüchen beschrieben sind.

Danach erfolgt das erfindungsgemäße Verfahren zum Fügen von Blechüberlappverbindungen im Transformatorenbau mittels Rührreibschweißen durch den Einsatz eines rotationssymmetrisches Werkzeuges, an dessen Stirnfläche (Schulter) ein Schweißstift angeordnet ist, welcher beim Schweißvorgang in die Fügestelle eintaucht und dabei dessen Schulter auf der Bauteiloberfläche aufsitzt, so dass beim Schweißvorgang eine Werkstofferweichung und -vermischung stattfindet. Um eine feste Verbindung zwischen der Transformatorenwicklung und dem Ausleiter eines Transformators für den elektrischen Abgriff realisieren zu können, wird das anzuordnende Blechband der Wicklung auf dem Ausleiter mittels Niederhaltetechnik sehr eng an bzw. neben der Fügestelle lagefixiert und niedergehalten. Durch den Angriff eines rotationssymmetrischen Werkzeuges und die dabei zu realisierende ausreichend starke Reibung von Spitze und Schulter des Werkzeuges auf den Fügematerialien des Ausleiters und der Wicklung erfolgt eine Erwärmung derselben im Verbindungsbereich.

Das Material des Ausleiters als auch das fest anzuordnende Bandblechmaterial der Wicklung wird durch die Rotation des Werkzeuges dabei so stark erhitzt und mechanisch bewegt, dass ein mechanisches Vermengen der beiden Werkstoffe miteinander erreicht wird. Vorteilhaft ist, dass sowohl gleiche Materialien von Ausleiter und Wicklung als auch unterschiedliche Materialien, also z.B. Aluminium mit Kupfer fest zusammengefügt werden. Es findet keine Aufschmelzung im Bereich der Fügestelle statt, sondern nur ein mechanisches Vermengen von zwei Materialien im erweichten Zustand an dessen Kontaktstelle im Bereich des Werkzeugangriffs. Dadurch ist es auch möglich, dass Materialien mit relativ unterschiedlichen Materialstärken, bei Bandverlängerungen beispielsweise von 0,3 bis 3,0 mm und bei Anbindung an die Ausleiterschiene von 3 bis 12 mm verbunden werden können.
Durch eine geeignete Wahl von axialer Werkzeug-Anpresskraft, Drehzahl, Anstellwinkel und linearem Vorschub in Abhängigkeit von Materialart und Bauteilabmessungen wird eine optimale Prozesstemperatur erreicht, welche ein gutes Verrühren und damit eine sichere Verbindung der Fügepartner ermöglicht und Bauteilbeschädigungen oder Gratbildung vermeidet.
Zum Erreichen von optimalen und gleichbleibenden Fügestellen in Abhängigkeit von Werkstoff und Abmessungen der Fügepartner müssen geeignete Materialien und Geometrien für die Werkzeuge gewählt werden

Mit diesen Verfahrensschritten ist es möglich, einen sicheren qualitativ hochwertigen Verbund eines Überlappstoßes von Kupfer mit Kupfer, Aluminium mit Aluminium oder aber auch Kupfer mit Aluminium für den Verbund von Ausleiterschiene mit der Wicklung herzustellen.

Beim Wickeln der Transformatorenspulen von Leitstungstransformatoren ist es notwendig, dass beim Anbinden einer Bandverlängerung an die Spulenwicklung beim Wickelprozess ein fester und sicherer Verbund der Bandenden hergestellt werden kann.
Zur Verlängerung der Leiterbänder eines Transformators aus Kupfer oder Aluminium wird durch das erfindungsgemäße Verfahren mittels Rührreibschweißen durch ein rotationssymmetrisches Werkzeug, welches an seiner Stirnfläche (Schulter) einen Schweißstift aufweist, welcher beim Schweißvorgang in die Fügestelle eintaucht wobei die Schulter auf der Bauteiloberfläche aufsitzt und eine Werkstofferweichung und -vermischung erreicht, wodurch zwei Blechbandenden zusammengefügt werden.
Dazu werden die zu fügenden Enden der Leiterbänder mit gleichen Materialeigenschaften jeweils mittels Niederhaltetechnik sehr eng an bzw. neben der Fügestelle lagefixiert und niedergehalten, um ein Verrutschen der Bänder zu vermeiden und eine sichere Positionierung der Fügepartner während des Fügeprozesses zu garantieren.
Durch ausreichend starke Reibung von Spitze und Schulter des Werkzeuges im Verbindungsbereich erfolgt eine Erwärmung der Leiterbandenden im Fügebereich, ohne die Grundwerkstoffe aufzuschmelzen.
Infolge der Realisierung eines Anstellwinkels des Werkzeuges zur Oberfläche des Bauteils im Bereich von 1° bis 3° aus der Senkrechten heraus und entgegen der Vorschubrichtung erfolgt eine zusätzliche Druckausübung auf die hintere Kante des Werkzeuges und damit ein sicherer Materialtransport innerhalb der Verbindungsnaht. Durch diese spezielle Druckausübung mit der Schulter des rotationssymmetrischen Schweißwerkzeuges beim Oberflächenkontakt innerhalb der Schweißnaht und durch die Einstellung einer Rotationsgeschwindigkeit des Werkzeuges in Abhängigkeit von Materialbeschaffenheit und Materialdicke der zu verbindenden Leiterbänder sowie durch die Einstellung der notwendigen Vorschubgeschwindigkeit des Schweißwerkzeuges werden die Oberflächen der zu verbindenden Bandmaterialien erwärmt und verformt, die Materialvermengung durch die Rotationsbewegung des Werkzeuges und durch den speziellen Anstellwinkel des Werkzeuges unterstützt und dadurch eine zusätzliche mechanische Verklammerung der beiden Bauteilmaterialien unter Vermeidung einer unerwünschten Gratausbildung im Bereich der Fügestelle erreicht.
Zum Erreichen von optimalen und gleichbleibenden Fügevorgängen während der Schweißung ist das Erreichen der optimalen Prozesstemperatur, die jeweils optimale Vorschub- bzw. Schweißgeschwindigkeit und der optimale Anpressdruck des Werkzeuges in Abhängigkeit der eingesetzten Werkzeuggeometrie, dessen Anstellwinkel und den zu verbindenden Materialien und deren Materialstärke zu wählen.
Mit dieser Verfahrensvariante kann ein sicherer qualitativ hochwertiger Verbund eines Stumpfstoßes bei der Bandverlängerung, wo gleiche Materialien mit gleicher Materialstärke miteinander verbunden werden müssen erreicht werden.
Das Verfahren erlaubt die Verwendung von Reinaluminium (AL 99,7) mit einer Härte von 20HB bei einem der Materialpartner.

Beim Verbund von dünnen Blechen < 1mm ist es für eine qualitativ hochwertige Verbundherstellung von Vorteil, eine maximale zulässige Abweichung der Arbeitsebene der zu verbindenden Bandbleche zur Unterlage der Schweißvorrichtung von 1/10 mm durch Niederhalten des oberen Bandbleches mittels Niederhalteblechen entlang der Schweißnaht zu gewährleisten.

Um eine optimale Fügenaht zu erhalten, kann im Bereich unmittelbar nach dem Werkzeugangriff ein Abglätten der entstandenen Fügenaht durch das Aufliegen und Nachlaufen von Abglättrollen erfolgen.

Die Erfindung soll nachstehend an zwei Ausführungsbeispielen näher erläutert werden.
In der beigefügten Zeichnung zeigen:

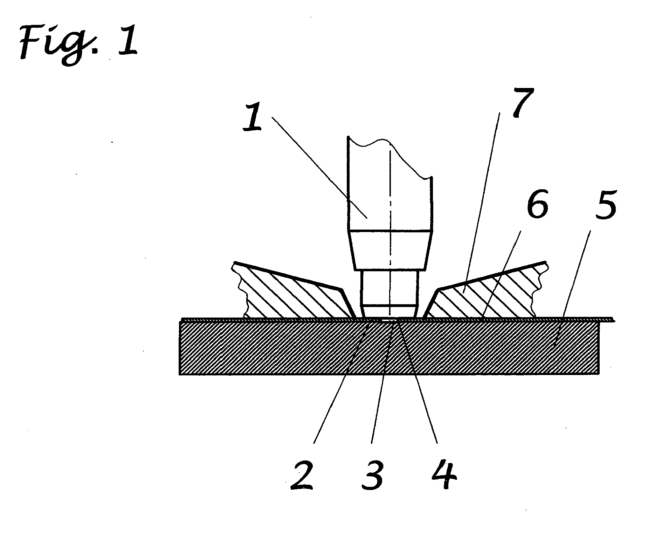

- Fig. 1: eine schematische Schnittdarstellung des Werkzeugangriffs beim Fügen von Ausleiterschiene des Transformators mit dem darüber liegenden Bandblech;

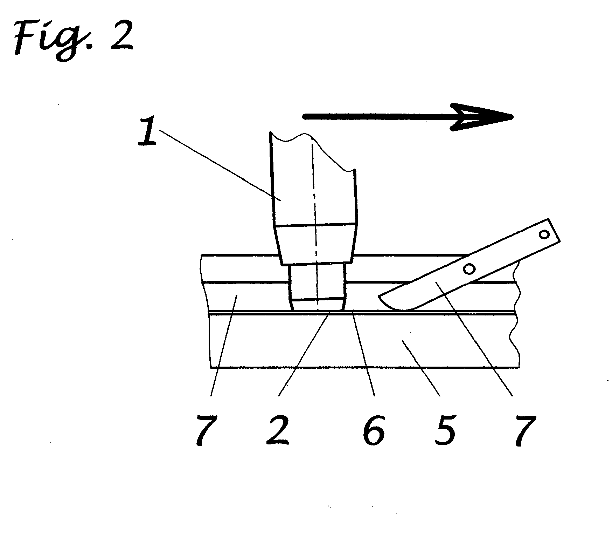

- Fig. 2: eine schematische Schnittdarstellung des Werkzeugangriffs beim Fügen einer Band-Stumpfstoß-Verbindung zur Bandverlängerung Bandwicklung eines Transformators in Vorschubrichtung und

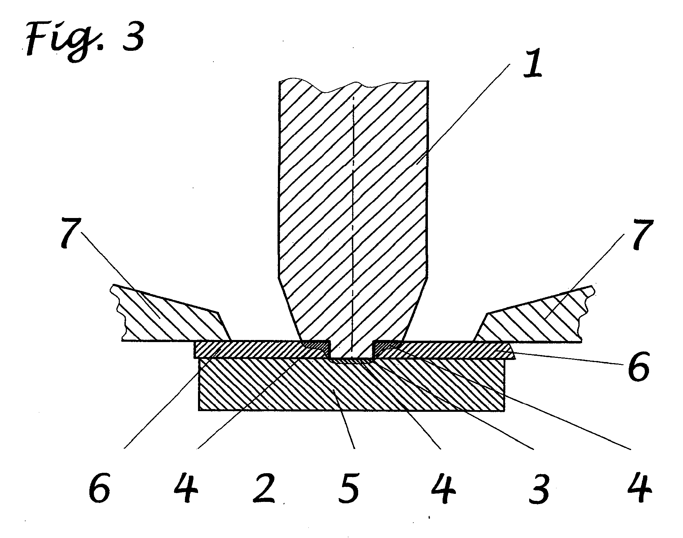

- Fig. 3: eine schematische Schnittdarstellung des Werkzeugangriffs beim Fügen von Ausleiterschiene des Transformators mit dem darüber liegenden Bandblech quer zur Vorschubrichtung.

### Ausführungsbeispiel 1:

Auf einem Ausleiter aus Kupfer wird ein Überlappstoß mit dem Aluminiumblech der Aluminiumwicklung eines Transformators angeordnet. Wichtig ist bei unterschiedlichen Werkstoffen, welche mittels Rührreibschweißtechnik verbunden werden sollen, dass Stift 2 und Schulter 3 des Werkzeuges 1 beide Fügepartner 5, 6 weder zu wenig noch zu sehr erwärmen, damit beide genügend plastifiziert sind um ein Verrühren und damit eine stoffschlüssige Verbindung zu ermöglichen.

Unterstützt wird dieser Vorgang durch die gleichzeitige Druckausübung auf die Schweißnaht mit der Schulter 2 des rotationssymmetrischen Schaftes des Schweißwerkzeuges 1. Wichtig ist bei der Durchführung der Schweißung eine für die zu verbindenden Materialien optimal abgestimmte Vorschub- bzw. Schweißgeschwindigkeit zu wählen, um zu verhindern, dass Hohlräume oder andere Defekte in der Schweißnaht entstehen, weil auf Grund fehlender Plastifizierung das Werkstoffgefüge zerstört wurde. Auch eine zu hohe Prozesstemperatur, welche z.B. bei einem zu geringen Vorschub entstehen kann, führt zu Scheißfehlern, weil zu sehr erweichtes Material nicht im Nahtbereich gehalten werden kann und unter Gratbildung den Fügebereich verlässt. Die Wahl der Vorschubbewegung ist stark abhängig von den zu verbindenden Materialien, deren Materialstärke und der Form und Größe des Werkzeuges und dessen Rotationsgeschwindigkeit. Die Größe und Form des Schweißwerkzeuges 1 wird bestimmt durch die Schultergröße 2, die Stiftlänge 3 und die Stiftform 3.

Deshalb wurden beim Fügen eines 1,2 mm starken Aluminiumbleches 6 auf einer Kupferschiene 5 folgende Parameter gewählt:
- Schweißgeschwindigkeit von 9,5 mm/s
- Eindringtiefe des Werkzeugstiftes 1,3 mm (=Stiftlänge)
- Schulterdurchmesser 15 mm
- Schweißstiftdurchmesser 6,5 mm
- Drehzahl des Werkzeuges zwischen 2000 min⁻¹ bis 2500 min⁻¹,
um ein optimale Schweißnaht mit feinschuppiger Oberfläche und gratfrei zu erhalten.

### Ausführungsbeispiel 2:

Für eine Bandverlängerung der Wicklung eines Hochleistungstransformators während des Wickelprozesses ist es notwendig, dass zwei Blechbandenden 6 mittels Blechstumpfstoß verbunden werden müssen. Dazu werden die Blechbandenden 6, in diesem Beispiel aus Reinaluminium (AL 99,7) mit einer Materialstärke von 1,2 mm, mit einem rotationssymmetrischen Werkzeug 1 bearbeitet. An der Stirnfläche 2 des Werkzeuges, welche als Schulter 2 ausgebildet ist, weist einen Schweißstift 3 auf. Dieser Schweißstift 3 , welcher beim Schweißvorgang in die Fügestelle 4 eintaucht, wobei die Schulter 2 auf der Bauteiloberfläche aufsitzt, realisiert durch dessen rotierenden Angriff auf die zu verbindenden Bandblechenden 6 durch ausreichend starke Reibung der Spitze des Stiftes 3 des Werkzeuges 1 im Verbindungsbereich eine Erwärmung der Leiterbandenden im Fügebereich 4 und somit eine Werkstofferweichung bei gleichzeitiger Werkstoffvermischung. Um eine qualitativ hochwertige Fügestelle zu erreichen ist es notwendig, dass die zu fügenden Enden 6 der Leiterbänder aus Aluminium jeweils mittels Niederhaltetechnik sehr eng an bzw. neben der Fügestelle lagefixiert und mittels Niederhalter 7 niedergehalten werden. Ein wichtiger Parameter für das Erreichen einer qualitativ hochwertigen Fügestelle ist der Anstellwinkel des Werkzeuges zur Oberfläche des Bauteils.

Dieser ist von der Materialart und der Materialdicke der zu verbindenden Bandenden 6 abhängig und wurde in diesem Beispiel zwischen 1° bis 3° aus der Senkrechten heraus entgegen der Vorschubrichtung gewählt. Durch die geeignete Wahl von axialer Werkzeug-Anpresskraft, Drehzahl, und linearem Vorschub in Abhängigkeit von Materialart und Bauteilabmessungen muss die optimale Prozesstemperatur erreicht werden, um eine ausreichende Erwärmung und damit Erweichung des Materials und ein Verrühren der Materialen der zu verbindenden Bandenden zu erreichen. Des Weiteren sind zur Vermeidung der Bauteilbeschädigung und/oder einer unerwünschten Gratbildung die Druckausübung auf die hintere Kante des Werkzeuges und damit ein sicherer Materialtransport innerhalb der Verbindungsnaht optimal einzustellen. Aber auch die Wahl der Abmessung des Werkzeuges, dessen Materialbeschaffenheit und dessen Geometrie spielen eine große Rolle für das Erreichen von optimalen und gleichbleibenden Fügevorgängen.

### Bezugszeichenliste:

- 1: rotierendes Werkzeug
- 2: Schulter des Werkzeugschaftes
- 3: Stift an der Schulter des Werkzeuges
- 4: Fügestelle
- 5: Ausleiterschiene eines Transformators
- 6: Blechband der Wicklung eines Transformators
- 7: Niederhaltertechnik

## Patentansprüche

1. Verfahren zum Fügen von Blechüberlappverbindungen im Transformatorenbau mittels Rührreibschweißen, bei dem ein rotierendes Werkzeug (1), an dessen Stirnfläche (Schulter) (2) ein Schweißstift (3) angeordnet ist, welcher beim Schweißvorgang reibend in die Fügestelle eintaucht und dessen Schulter (2) dabei auf der Bauteiloberfläche aufsitzt, so dass beim Schweißvorgang eine Werkstofferweichung und -vermischung stattfindet und dadurch an dem Ausleiter (5) eines Transformators für den elektrischen Abgriff ein die Transformatorenwicklung bildendes darüber liegendes Blechband (6) fest angefügt wird,
**dadurch gekennzeichnet** dadurch, **dass**
- das anzuordnende Blechband (6) auf der Schiene (5) mittels Niederhaltetechnik (7) sehr eng an bzw. neben der Fügestelle (4) lagefixiert und niedergehalten wird,
- das durch ausreichend starke Reibung -von Stift und Schulter (3, 2) des Werkzeuges auf den zu fügenden Materialien eine Erwärmung derselben im Verbindungsbereich erfolgt,
- das fest anzuordnende Bandblechmaterial (6) (aus Aluminium oder Kupfer) mit einer Materialstärke von 0,3 bis 3,0 mm dabei durch Erwärmung so stark erweicht wird, dass ein mechanisches Vermengen der beiden Werkstoffe erreicht wird,
- durch eine geeignete Wahl von axialer Werkzeug-Anpresskraft, -Drehzahl, -Anstellwinkel und linearem Vorschub in Abhängigkeit von Materialart und Bauteilabmessungen eine optimale Prozesstemperatur erreicht wird, welche ein gutes Verrühren und damit eine sichere Verbindung der Fügepartner ermöglicht und Bauteilbeschädigungen und/oder Gratbildungen vermeiden und
- zum Erreichen von optimalen und gleichbleibenden Fügestellen (4) in Abhängigkeit von Werkstoff und Abmessungen der Fügepartner geeignete Materialien und Geometrien für die Werkzeuge (1) gewählt werden.

2. Verfahren zum Fügen von Blech -Stumpfstoßverbindungen im Transformatorenbau mittels Rührreibschweißen, bei dem ein rotationssymmetrisches Werkzeug (1), dessen Stirnfläche (Schulter) (2) einen Schweißstift (3) aufweist, welcher beim Schweißvorgang in die Fügestelle (4) eintaucht, wobei die Schulter (2) auf der Bauteiloberfläche aufsitzt, so dass beim Schweißvorgang eine Werkstofferweichung und - vermischung stattfindet und dadurch zur Verlängerung der Leiterbänder eines Transformators aus Kupfer oder Aluminium zwei Blechbandenden miteinander zusammengefügt werden,
**dadurch gekennzeichnet** dadurch,
- dass die zu fügenden Enden der Leiterbänder mit gleichen Materialeigenschaften jeweils mittels Niederhaltetechnik (7) sehr eng an bzw. neben der Fügestelle (4) lagefixiert und niedergehalten werden,
- dass durch ausreichend starke Reibung des Stiftes (3) des Werkzeuges (1) im Verbindungsbereich eine Erwärmung der Leiterbandenden im Fügebereich (4) erfolgt,
- dass infolge der Realisierung eines Anstellwinkels des Werkzeuges (1) zur Oberfläche des Bauteils im Bereich von 1° bis 3° aus der Senkrechten heraus entgegen der Vorschubrichtung eine zusätzliche
- Druckausübung auf die hintere Kante des Werkzeuges und damit ein sicherer Materialtransport innerhalb der Verbindungsnaht erfolgt,
- dass durch eine geeignete Wahl von axialer Werkzeug-Anpresskraft, Drehzahl, Anstellwinkel und linearem Vorschub in Abhängigkeit von Materialart und Bauteilabmessungen eine optimale Prozesstemperatur erreicht wird, welche ein gutes Verrühren und damit eine sichere Verbindung der Fügepartner ermöglicht und Bauteilbeschädigung oder Gratbildung vermieden wird,
- dass zum Erreichen von optimalen und gleichbleibenden Fügevorgängen in Abhängigkeit von Werkstoff und Abmessungen der Fügepartner geeignete Materialien und Geometrien für die Werkzeuge gewählt werden.

3. Verfahren zum Fügen von Blech-Stumpfstoßverbindungen im Transformatorenbau mittels Rührreibschweißen nach dem Anspruch 2, **dadurch gekennzeichnet, dass** beim Einsatz von Aluminiummaterial Reinaluminium (AL 99,7) mit einer Härte von 20HB eingesetzt wird.

4. Verfahren zum Fügen von Blechüberlappverbindungen im Transformatorenbau mittels Rührreibschweißen nach den Ansprüchen 1 bis 5, **dadurch gekennzeichnet, dass** im Bereich unmittelbar nach dem Werkzeugangriff ein Abglätten der entstandenen Fügenaht durch das Aufliegen und Nachlaufen von Abglättrollen erfolgt.
